# EUROPEAN PATENT APPLICATION

(11) **EP 1 008 788 A2**
(43) Date of publication of application: **14.06.2000**
(21) Application number: 99124226.4
(22) Date of filing: 03.12.1999
(51) Int. Cl.: F16K 7/10

(54) **Blown air apparatus**

(30) Priority: 09.12.1998 GB 9826916
(71) Applicant: Air Control Industries Ltd, Chard, Somerset, TA20 2AE (GB)
(72) Inventor: Tuffin, Paul, Chard, Somerset TA20 2TF (GB); Brister, Nicholas Thomas, Chard, Somerset TA20 2HN (GB)
(74) Representative: Lucking, David John

(57) **Abstract**

A blown air apparatus (10) includes a source (11) of air, means (F) to blow the air and an air outlet for the blown air, and a control means (14) for controlling the air flow from the source (11), to the outlet (20) the control means (14) including a valve member (22) for opening and closing an air flow path for air from the source (11) to the outlet (20) the valve member (22) having a chamber including at least one flexible wall part and being inflatable to close or open the air flow path, characterised in that there is a control passage (30) for the air extending from the valve member (22) and being in communication within the chamber, the control passage (30) when closed or opened causing the valve member (22) to operate to permit or prevent air to flow along the air flow path, and the control passage (30) when opened or closed respectively, causing the valve member (22) to operate to prevent or permit air to flow along the air flow path.

## Description

### Description of Invention

This invention relates to a blown air apparatus.

Blown air apparatus are used as an alternative in industry, to compressed air which tends to be expensive in terms of production and compliance with health and safety considerations. Blown air is used for examples, for drying, cleaning and the like.

Conventionally blown air apparatus have had positionally fixed nozzle air discharge outlets. Hand held air "guns" have conventionally used compressed air with there being a control valve adjacent the discharge nozzle. A blown air apparatus with a control valve adjacent the discharge nozzle would be bulky because blown air discharge nozzles need to be larger than their compressed air counterparts in order to achieve to same air flow at lower pressures. Consequently, a control valve for such larger nozzle would add even more bulk, making the hand held device unwieldy.

Hence for a blown air apparatus, it is preferred for any bulky control valve to be located remotely from the hand held discharge means.

According to the invention we provide a blown air apparatus according to claim 1.

Such valve member arrangement may thus be of simple bag-like construction, and is inexpensive to produce whilst being inherently very reliable.

In one arrangement, the means to blow the air is located downstream of the valve member, the chamber of the valve member being connected to the blown air and being inflatable by the blown air when the control passage is closed, and being deflated when the control passage is open.

Such an arrangement lends itself particularly to a use where the blown air is provided for use. In this case the control means may readily be positioned remotely from the air outlet so that the apparatus lends itself for use for where the air outlet is a hand held blown air discharge means.

Alternatively, the means to blow the air may be located upsteam of the valve member, the valve member being located in a housing in the air flow path, the control passage communicating with an auxiliary air source which is at a pressure greater than that in the housing, the valve member being inflatable by air from the auxiliary air source when the control passage is open.

Additionally, the control passage is also in restricted communication with air in the air flow path so that when the control passage is closed, air from the chamber of the valve member may flow into the air flow path so that the valve member deflates.

In each case, the valve member when inflated, may close the air flow path by blocking the air flow path, or may be used in conjunction with a slave valve which is operable to open or close the air flow path, the valve member when inflated acting to operate the slave valve to open the air flow path.

The control passage which extends from the valve member may be opened and closed by many different means. In one example, the control passage is opened and closed by the action of an electrically operated means such as a solenoid operated valve. Even though such solenoid operated valves tend to be bulky and heavy, by virtue of the invention, this may conveniently be positioned remotely from the air outlet which may be a hand held discharge means, so that the manoeuvrability of the discharge means is substantially unaffected, although it will be appreciated that a control line i.e. one or more electrical cables, may need to extend to the discharge means where provided, and a switch device or other control would be required located at or adjacent to the discharge means to operate the solenoid valve or other electrically operated means from the discharge means.

In another arrangement, the control passage may extend towards the discharge means and be openable and closable by a manual operation at a position located at or adjacent the discharge means.

In yet another arrangement the control passage may be opened and closed by the operation of an auxiliary valve member which includes an auxiliary chamber having at least one flexible wall part, and there being an auxiliary control passage in communication with the auxiliary chamber and the auxiliary chamber being connected to the air source, whereby the auxiliary valve member is operated by being inflated by air from the air source when the auxiliary control passage is closed, and is operated by deflating when the auxiliary control passage is opened.

Such auxiliary valve member when inflated, is preferably operable to open the control passage of the valve member, by acting on a slave valve member which is moved to open the control passage.

It will be appreciated that in an apparatus according to the invention, air flowing to the air outlet may be air for use, i.e. blown air, but alternatively the air outlet may be a vent through which the air flow is vented in preference the air flow being supplied for use.

Embodiments of the invention will now be described with reference to the accompanying drawings in which:-
FIGURE 1 shows illustratively the principle of operation of a first embodiment of an apparatus in accordance with the invention;
FIGURE 2 is a side illustrative view of a control means of a first embodiment of the invention;
FIGURE 3 shows illustratively the principle of operation of a second embodiment of an apparatus in accordance with the invention;
FIGURE 4 is an end illustrative view of a control means of a second embodiment of the invention;
FIGURE 5 shows illustratively the principle of operation of a third embodiment of an apparatus in accordance with the invention
FIGURE 6 is an illustrative view of a fourth embodiment of the invention.

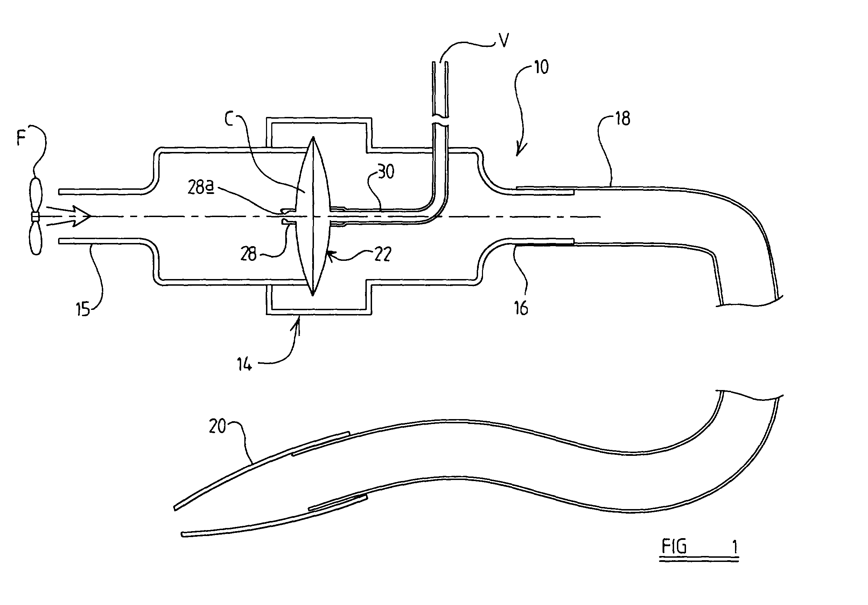

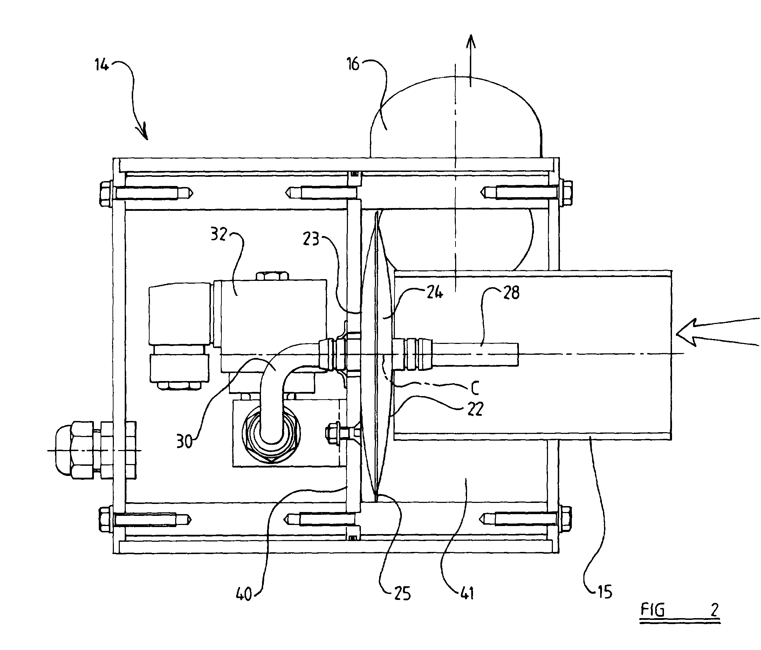

Referring to figures 1 and 2 of the drawings there is shown a blown air apparatus 10 including a source 11 of blown air, from an air blower (not shown). The blown air enters a control means 14 through an inlet which in this case is a spigot 15, and exits the control means 14 for use, through an outlet which again in this example is a spigot 16, which outlet 16 is connected to a conduit 18 which extends to an air outlet or discharge means 20, which in this example includes a hand held nozzle.

The control means 14 controls the flow of air to the discharge nozzle 20 and including a valve member 22 which is operable either to block the air path from the inlet 15 to the outlet 16, or to permit air flow.

The valve member 22 including a chamber C bounded by a pair of generally circular flexible walls 23,24, which are connected e.g. by welding, adhesive or the like, around their circumferences 25, so as to form a single cell bellows or bag. Of course, the walls 23,24 need not be circular in another embodiment, or a valve member 22 having suitable characteristics to operate as described below for this and the other embodiments, may be of another configuration e.g. having only part of the chamber C bounded by a flexible wall.

The wall 24 which faces the incoming air flow through the inlet 15 has an opening, in this example arranged generally centrally, which receives a tube 28 of small diameter compared with that of the inlet 15. Thus the chamber C communicates with the source 11 of blown air. The tube 28 may be restricted as required, e.g. with an orifice 28a to control the flow of air into and from the chamber C as hereinafter described.

The opposite wall 23 of the valve member 22 also has an opening, again arranged generally centrally in this embodiment, which receives a further tube 30 which is a control passage, which again is in communication with the chamber C.

The valve member 22 is positioned so that when air may flow from the inlet 15 through the chamber C, along the control passage to a vent 31 (hidden in figure 2), blown air may flow past the valve member 22 to the outlet 16 and hence to the discharge nozzle 20 for use. However, if the air flow from the chamber C is prevented by the control passage 30 being blocked, the valve member 22 will inflate, and prevent the air flow to the discharge nozzle 20.

Although the pressure within the chamber C will be the same as that of the supplied blown air in the inlet 15, the valve member 22 is able to inflate as the pressure working on each of the walls 23,24 of the valve member 22 will create a skin tension which is able to overcome the air pressure in the inlet 15.

To achieve this, preferably the flexible walls 23,24 are made from a material of woven nylon which is totally encapsulated in polyurethane, although other suitable materials may be used. Also, for more effective sealing, there is provided a backing support wall 40 against which the flexible wall 23 which faces away from the inlet 15 bears when the valve member 22 is inflated. The control passage 30 extends through the backing support wall 40. The backing support wall 40 also serves to provide a plenum 41 within the control means 14, with which the outlet 16 communicates.

Various means may be utilised to open and close the control passage 30, to operate the valve member 22 depending on the use to which the apparatus 10 is put.

In figure 2, a solenoid operated valve 32 is illustrated. The valve 32 may be of the kind which is normally closed until an electrical signal is received, so that the valve member 22 is normally inflated to close the air supply to the discharge nozzle 20, or in another arrangement though, where an air supply is required until a control is operated to interrupt the air supply, the solenoid valve 32 may be of the kind which is normally open, so that the control passage 30 is normally open and the valve member 22 is deflated.

In yet another arrangement, the valve member 22, instead of blocking the air flow when inflated, may be arranged to act through a slave valve such as a flap valve, so that when inflated, the valve member 22 permits air flow to the discharge nozzle 20 or other discharge means, and when deflated the slave valve blocks the air flow.

In each case where a solenoid valve 32 or any other electrically operated means is utilised, the valve 32 may be controlled by a control such as for example for a hand held nozzle, a simple switch at the discharge nozzle. Thus typically an electrical line will be required between the control at the discharge nozzle 20 and the electrically operated means of the control means 14. The solenoid valve 32 is particularly useful when the air supply is used in a fixed installation in which case some other remote signalling arrangement may be utilised e.g. a control signal may be provided to solenoid valve 32 from, say, a photocell at the fixed installation.

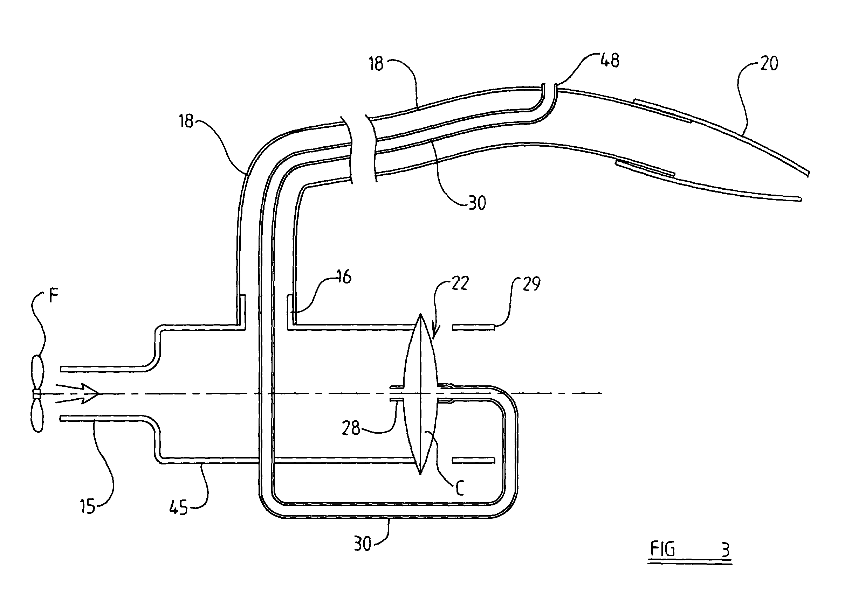

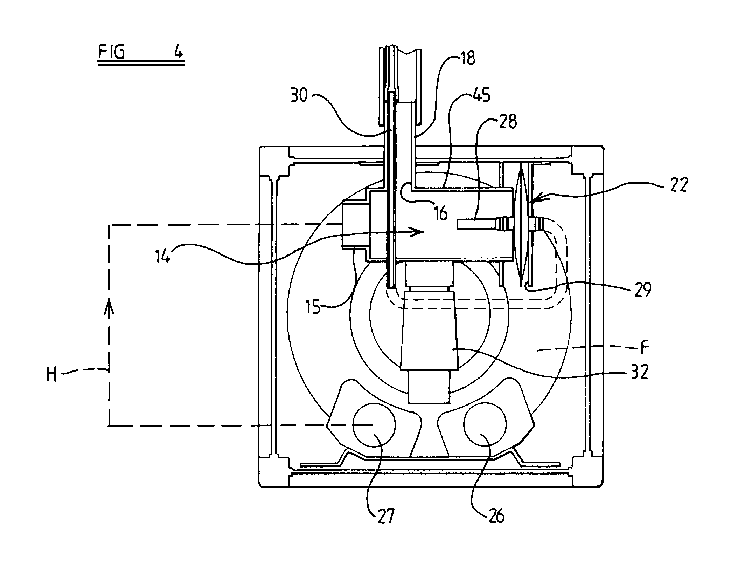

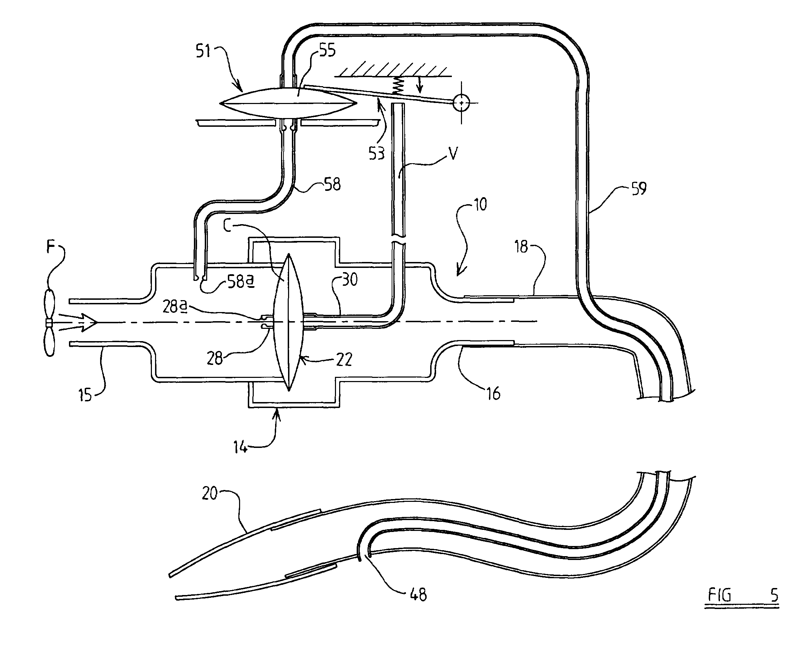

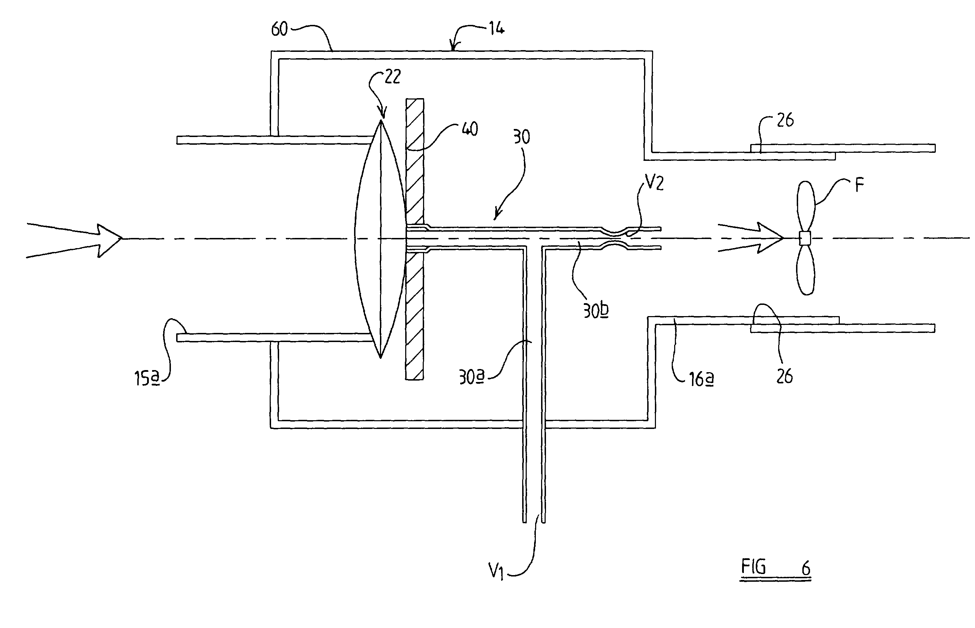

Referring now to figures 3 and 4, a second embodiment will be described. Similar parts to those of the figures 1 and 2 embodiment are labelled by the same reference signs where applicable.

In this arrangement, a valve member 22 again opens or closes an air flow, but when open, the air flow is vented to an air outlet preferentially to being discharged for use. Thus the valve member 22 acts as a dump valve.

A fan or blower F draws in air through a blower inlet 26, and blows the air from a blower outlet 27 which is connected to a valve inlet 15 e.g. by a flexible hose H.

The inlet 15 extends to a passage 45 along which the air may flow, when the valve member 22 is deflated, to the valve member 22 and hence from the control means 14 to a vent 29. From the outlet 16 from the passage 45 there extends a conduit 18 which extends to the discharge nozzle 20 or other discharge means.

The passage 45 of the control means 14 is of significantly greater diameter than the diameter of the conduit 18, and the entrance to the conduit 18 is arranged at a sharp angle, 90° in this example, to the natural air flow direction straight along the passage 45. Thus although there may be some air flow to the discharge nozzle 20 when the valve member 22 is deflated, preferentially, the air flow will be to the vent 29.

When the valve member 22 is inflated, as the control passage 30 thereof is closed, air flow to the vent 29 will be prevented and thus all the air flow will be to the discharge nozzle 20 along the conduit 45.

A relief valve 32 is provided to relieve pressure in the passage 45, if for example the discharge nozzle 20 is blocked.

Although in this embodiment, air flow though the control passage 30 may be controlled by a solenoid or other electrically operated means, such as solenoid operated valve 32 in the figure 2 arrangement, preferably the air flow through the control passage 30 is controlled by a manually operated means. Thus the control passage 30 extends, within the delivery conduit 18 in this example, to the discharge nozzle 20, where the control passage 18 opens to an opening 48. The opening 48 may be positioned so that an operative may manually close the opening 48 e.g. with a thumb, with the effect that the valve member 22 will be inflated and all the blown air will be delivered to the discharge nozzle 20 for use.

If desired a conversely operating arrangement may be provided, by the valve member 22 operating through a slave valve, so that when inflated, the air flow to the vent 29 is opened, and when the valve member 22 is deflated, air flow to the vent 29 is blocked.

In the figures 1 and 2, and figures 3 and 4 arrangements, instead of electrically operated and/or manually operated means being provided to open/close the control passage 30, another valve member, like valve member 22 may be provided to achieve this, as illustrated in figure 5.

Again similar parts to those provided in the other embodiments are labelled with the same reference signs.

The arrangement shown in figure 5 is similar to that of figures 1 and 2 in principle in that the valve member 22 controls air flow from the inlet 15 to the discharge nozzle 20, but could be applied to a figures 3 and 4 type arrangement in which the valve member 22 controls air flow to a vent 29.

The control passage 30 of the valve member 22 extends to a vent V, and a slave valve 51, similar in construction to valve member 22, is operative to control the air flow along the control passage 30 to the vent V. The slave valve 51, operates a spring loaded flap valve 53 which is acted upon by an auxiliary valve member 55. When an auxiliary valve member 55 is deflated the spring of the flap valve 53 acts to move the flap valve 53 to close the air flow to the vent V, so that (main) control valve 22 inflates. When the auxiliary valve 55 member inflates, the force of the spring of the flap valve 53 is overcome to open the vent V to allow air flow along the control passage 30 from the (main) valve member 22 to flow to the vent V, so that the (main) valve member 22 deflates.

The auxiliary valve member 55 is provided with supply air from the inlet 15 via a supply conduit 58 which is constructed by an orifice 58a, and an auxiliary control passage 59 from the auxiliary valve member 55 extends to the discharge nozzle 20, preferably at least partly within the delivery conduit 18, so that an opening 48 of the auxiliary control passage 59 may be opened and closed by a manual operation similar to that described with reference to figure 2. Depending on the nature of the slave valve 51 and the flap valve 53 blocking/unblocking at the opening 48 may cause the (main) valve member 22 to inflate or allow deflation to permit or prevent flow of the air to the discharge nozzle 20.

Instead of a spring loaded flap valve 53, some other mechanism to enable a slave valve 51 to control the flow of air along the control passage 30 of the main valve 22 may be provided if desired.

Referring now to figure 6, a fourth embodiment of the invention is shown, with similar parts to those in the previous embodiments being labelled by the same reference signs.

In this embodiment, the blower means F to blow the air is located upstream of the valve member 22. The control means 14 includes a housing 60 which has an inlet 15a open to a source 11 of ambient air rather than blown air as in the previous embodiments, and an outlet 16a which is connected to a blower inlet 26. The blower F is connected to an air outlet (not shown). The valve member 22 is located in the housing 60 and air may be drawn by the blower F to flow from the housing inlet 15a past the valve member 22 when the valve member 22 is deflated, through the housing 60 to the housing outlet 16a. When the valve member 22 is inflated though, air flow into the housing 60 is prevented.

In this embodiment, the valve member 22 when inflated, acts between a backing support wall 40 located in the housing 60, and for example supported in the housing 60 by a spider type support structure, and the housing inlet 15a, to seal the housing inlet 15a and prevent the flow of air into the housing 60.

A control passage 30 extends from and communicates with the chamber C, the control passage 30 having a first branch 30a which extends to an auxiliary air source, in this case a source of ambient air V1, and a second branch 30b which opens into the air flow in the housing 60, via a throttled or otherwise constricted opening V2.

When the blower F is operated, air will be drawn from the housing 60 and as a result, the air pressure in the housing 60 will be reduced compared to ambient. When the first branch 30a of the control passage 30 is opened to the source of ambient air V1, the ambient air, which will be at a greater pressure than the air in the housing 60, will flow into the chamber C of the valve member 22 and as a result the valve member 22 will become inflated as shown and block the air flow from the inlet 15a. Although some of the ambient air drawn into the control passage 30 will flow into the second branch 30b of the control passage 30 and hence into the housing 60, due to the restriction V2, the amount of air this will not inhibit the valve member 22 from inflating.

When the control passage 30 is closed to the source of ambient air V1, air in the chamber C of the valve 22 will be drawn out by the upsteam blower, through the second branch 30b, and as a result the valve member 22 will deflate to allow an air flow through the housing 60.

The control passage 30 may be opened or closed manually or by a solenoid or other electrically actuated or other means.
Whereas the embodiments of figures 1 to 5 lend themselves particularly to arrangements in which the discharged blown air is used, e.g. for drying, cooling or the like, in a factory environment, the arrangement of figure 6 lends itself more particularly to an arrangement in which the blown air is discharged to atmosphere and the air inlet 15a to the housing 60 is used as a source of vacuum i.e. for sucking air. However the arrangements of the figures 1 to 5 embodiments may be adapted for use in providing a source of vacuum and the arrangement of figure 6 may be adapted for supplying blown air as desired.

Various other modifications may be made without departing from the scope of the invention.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A blown air apparatus (10) including a source (11) of air, means (F) to blow the air and an air outlet (20) for the blown air, and a control means (14) for controlling the air flow from the source (11) to the outlet (20), the control means (14) including a valve member (22) for opening and closing an air flow path for the air from the source (11) to the outlet (20), the valve member (22) having a chamber (C) including at least one flexible wall part and the valve member (22) being inflatable to close or open the air flow path, characterised in that there is a control passage (30) extending from the valve member (22) and being in communication with the chamber (C), the control passage (30) when closed or opened causing the valve member (22) to operate to permit or prevent air to flow along the air flow path, and the control passage (30) when opened or closed respectively, causing the valve member (22) to operate to prevent or permit air to flow along the air flow path.

2. An apparatus according to claim 1 characterised in that the means (F) to blow the air is located downstream of the valve member (22), the chamber (C) of the valve member (22) being connected to the blown air and being inflatable by the blown air when the control passage (30) is closed, and being deflated when the control passage (30) is open.

3. An apparatus according to claim 1 characterised in that the means (F) to blow the air is located upsteam of the valve member (22), the valve member (22) being located in a housing (60) in the air flow path, the control passage (30) communicating with an auxiliary air source (V1) which is at a pressure greater than that in the housing (60), the valve member (22) being inflatable by air from the auxiliary air source (V1)when the control passage (30) is open.

4. An apparatus according to claim 3 characterised in that the control passage (30) is also in restricted communication with air in the air flow path so that when the control passage (30) is closed, air from the chamber (C) of the valve member (22) may flow into the air flow path so that the valve member (22) deflates.

5. An apparatus according to any one of claims 1 to 4 characterised in that the valve member (22) when inflated, closes the air flow path by blocking the air flow path.

6. An apparatus according to any one of claims 1 to 4 characterised in that there is a slave valve (S1) which is operable to open or close the air flow path, the slave valve (S1) when inflated acting to operate the valve member (22) to open the air flow path.

7. An apparatus according to any one of the preceding claims characterised in that the control passage (30) is opened and closed by the action of an electrically operated means (32).

8. An apparatus according to any one of claims 1 to 6 characterised in that the air outlet (20) is connected to an air discharge means from which the air is used, the control passage (30) extending towards the discharge means (20) and being opened and closed by a manual operation at a position located at or adjacent the discharge means.

9. An apparatus according to any one of claims 1 to 6 where appendent to claim 2 characterised in that the control passage (30) is opened and closed by the operation of an auxiliary valve member (51) which includes an auxiliary chamber (55) having at least one flexible wall part, and there being an auxiliary control passage (59) in communication with the auxiliary chamber (55) and the auxiliary chamber (55) being connected to the air source (11), whereby the auxiliary valve member (51) is operated by being inflated by air from the air source (11) when the auxiliary control passage (59) is closed, and is operated by deflating when the auxiliary control passage (59) is opened.

10. An apparatus according to claim 9 characterised in that the auxiliary valve member (51) when inflated, is operable to open the control passage (30) of the valve member (22), by acting on a slave valve member (53) which is moved to open the control passage.

11. An apparatus according to any one of the preceding claims characterised in that air flowing to the air outlet (20) is air for use.

12. An apparatus according to any one of claims 1 to 10 characterised in that the air outlet (20) is a vent through which the air flow is vented in preference the air flow being supplied for use.
